# EUROPEAN PATENT SPECIFICATION

(11) **EP 3 222 958 B1**
(45) Date of publication and mention of the grant of the patent: **24.10.2018**
(21) Application number: 17161075.1
(22) Date of filing: 15.03.2017
(51) Int. Cl.: F28F 9/02, F28F 27/02, B64D 13/08

(54) **HEAT EXCHANGER WITH INTEGRAL BYPASS VALVE**
WÄRMEAUSTAUSCHER MIT INTEGRALEM BYPASSVENTIL
ÉCHANGEUR DE CHALEUR MUNI D'UNE SOUPAPE DE DÉRIVATION INTÉGRÉE

(30) Priority: 16.03.2016 US 201662309076 P
(43) Date of publication of application: 27.09.2017
(73) Proprietor: Hamilton Sundstrand Corporation, Windsor Locks, CT 06096-1010 (US)
(72) Inventor: ARMY, Donald E., Enfield, CT 06082 (US); PEACOS III, Frederick, North Scituate, RI 02857 (US)
(74) Representative: Dehns

(56) References cited:
- EP-A1- 0 371 082
- EP-A1- 1 464 575
- EP-A1- 2 808 256
- EP-A1- 2 985 224
- DE-A1-102011 013 184
- US-A- 4 930 571
- US-A1- 2005 103 464
- US-A1- 2009 293 478

## Description

### CROSS-REFERENCE TO RELATED APPLICATIONS

The present application claims priority from U.S. Provisional Patent Application Numbers 62/309,076, 62/309,080, 62/309,081, and 62/309,084, filed on March 16, 2016. The contents of the priority applications are hereby incorporated by reference in their entireties.

### BACKGROUND

The subject matter disclosed herein generally relates to heat exchangers and, more particularly, to heat exchangers having integral bypass valves.

Heat exchangers can include various components and/or configurations to enable a desired flow control and thus a desired conditioning of air passing through the heat exchanger. Depending on the configuration, such control can require ducts, flanges, seals, couplings, etc. that can be used to aid in flow control through the heat exchanger. However, such additional elements or components can increase a weight and/or cost of the heat exchanger. Thus, it may be advantageous to improve the flow control and number of components of heat exchangers. US 2005/0103464 A1 describes a heat recovery ventilator with integrated bypass and bypass valve. EP 1 464 575 A1 describes an environmental control system of an aircraft comprising a condenser according to the preamble of claim 1.

### SUMMARY

An environmental control system of an aircraft is defined in claim 1. The environmental control system includes a condenser configured to condition air to be supplied to a cabin of the aircraft. The condenser includes a heat exchanger. The heat exchanger includes a heat exchanger core defining at least two separate heat exchanger flow streams, a first header configured on the heat exchanger core and fluidly connected to a first of the separate heat exchanger flow streams, a second header configured on the heat exchanger core and fluidly connected to a second of the separate heat exchanger flow streams, and an integrated bypass system configured to directly fluidly connect the first header to the second header with a bypass conduit, the integrated bypass system having a control valve within the bypass conduit and configured to control flow through the bypass conduit.

In addition to one or more of the features described herein, or as an alternative, the heat exchanger of the control system may include that the bypass conduit is connected to the first header by a slip joint at a first end of the bypass conduit.

In addition to one or more of the features described herein, or as an alternative, the heat exchanger of the control system may include that the bypass conduit is connected to the second header by a fixed connection at a second end of the bypass conduit.

In addition to one or more of the features described herein, or as an alternative, the heat exchanger of the control system may include that the fixed connection is one of a fixed cavity coupling, a bolted flange, a C-clamp, a D-clamp, or v-band.

In addition to one or more of the features described herein, or as an alternative, the heat exchanger of the control system may include that the control valve is one of a butterfly valve, ball valve, gate valve, check valve, or globe valve.

In addition to one or more of the features described herein, or as an alternative, the heat exchanger of the control system may include that the first header is configured to receive hot air and the second header is configured to exhaust cold air.

In addition to one or more of the features described herein, or as an alternative, further embodiments of the environmental control system may include a ram module and a refrigeration module, wherein the condenser is configured within the refrigeration module.

In addition to one or more of the features described herein, or as an alternative, further embodiments of the environmental control system may include at least one duct fluidly connecting the ram module to the first header of the condenser.

In addition to one or more of the features described herein, or as an alternative, further embodiments of the environmental control system may include that the bypass conduit is connected to the first header by a slip joint at a first end of the bypass conduit.

In addition to one or more of the features described herein, or as an alternative, further embodiments of the environmental control system may include that the bypass conduit is connected to the second header by a fixed connection at a second end of the bypass conduit.

In addition to one or more of the features described herein, or as an alternative, further embodiments of the environmental control system may include that the fixed connection is one of a fixed cavity coupling, a bolted flange, a C-clamp, a D-clamp, or v-band.

In addition to one or more of the features described herein, or as an alternative, further embodiments of the environmental control system may include that the control valve is one of a butterfly valve, ball valve, gate valve, check valve, or globe valve.

In addition to one or more of the features described herein, or as an alternative, further embodiments of the environmental control system may include that the first header is configured to receive hot air and the second header is configured to exhaust cold air.

Technical effects of embodiments of the present disclosure include heat exchangers having integrated bypass valve systems that reduce the number of ducts, flanges, seals, and/or coupling as compared to traditional or conventional supply duct configurations.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1A is a schematic illustration of an aircraft that can incorporate various embodiments of the present disclosure;
FIG. 1B is a schematic illustration of a bay section of the aircraft of FIG. 1A;
FIG. 2A is a schematic, perspective illustration of an environmental control system of an aircraft that can incorporate embodiments of the present disclosure;
FIG. 2B is a second perspective illustration of the environmental control system of FIG. 2A;
FIG. 3A is a schematic illustration of a heat exchanger having an integrated bypass system in accordance with an embodiment of the present disclosure; and
FIG. 3B is an exploded illustration of the heat exchanger and integrated bypass system of FIG. 3A.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "##" that is shown in FIG. X may be labeled "X##" and a similar feature in FIG. Z may be labeled "Z##." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

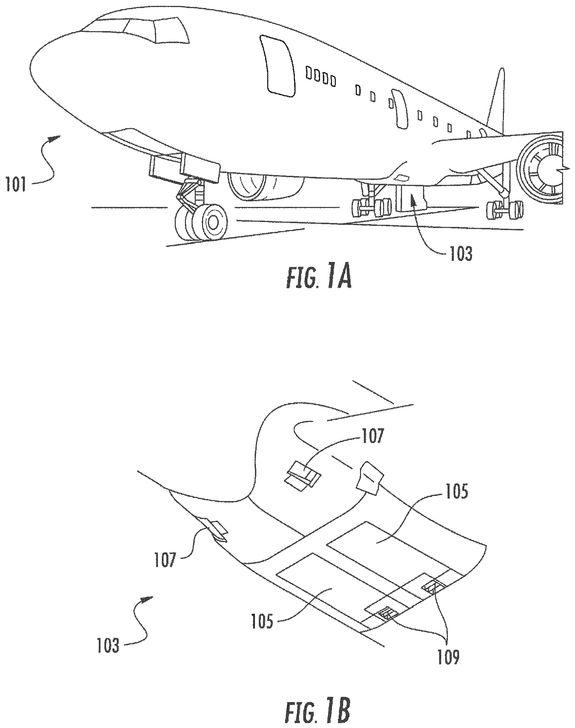

As shown in FIGS. 1A-1B, an aircraft 101 can include one or more bays 103 beneath a center wing box. The bay 103 can contain and/or support one or more components of the aircraft 101. For example, in some configurations, the aircraft 101 can include environmental control systems within the bay 103. As shown in FIG. 1B, the bay 103 includes bay doors 105 that enable installation and access to one or more components (e.g., environmental control systems). During operation of environmental control systems, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., passenger cabin, etc.). Some air may be exhaust through one or more ram air exhaust outlets 109.

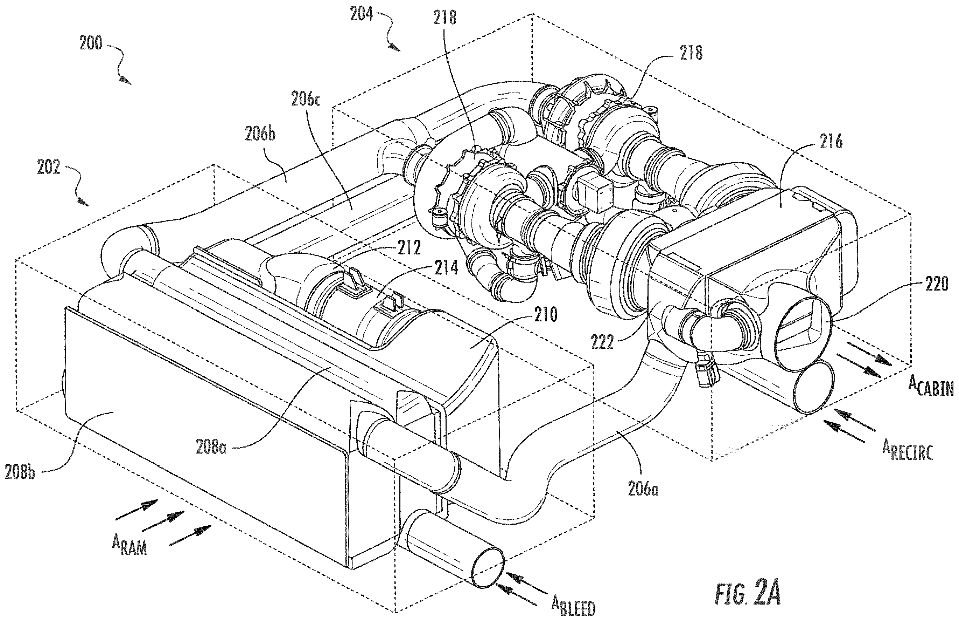

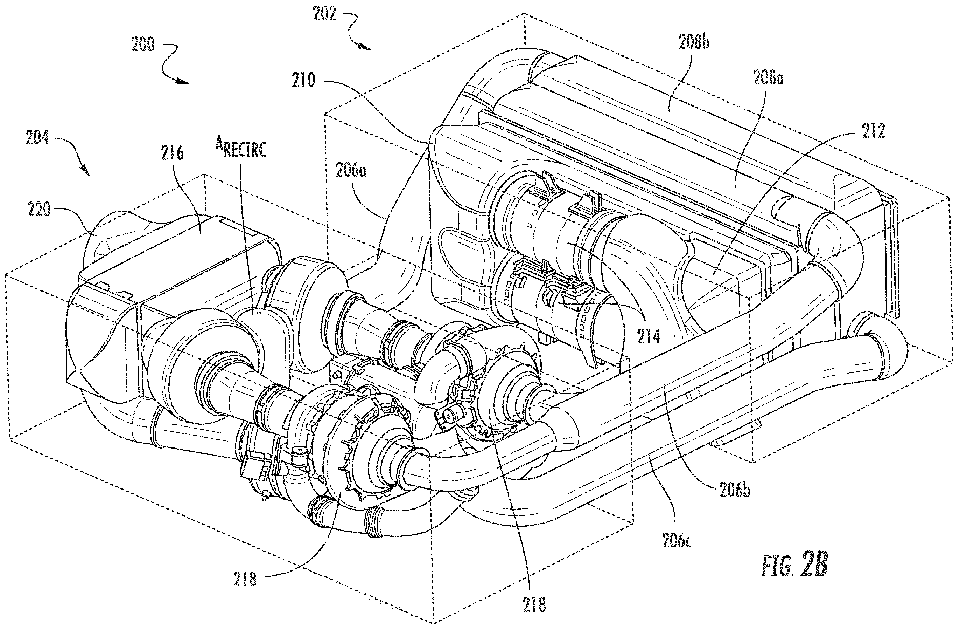

Turning now to FIGS. 2A-2B, an environmental control system 200 in accordance with an embodiment of the present disclosure is shown. The environmental control system 200 includes a ram module 202 and a refrigeration module 204 that are fluidly connected by one or more ducts 206a, 206b, 206c. FIG. 2A shows a first perspective illustration of the environmental control system 200 and FIG. 2B shows a second perspective illustration of the environmental control system 200. The environmental control system 200 of FIGS. 2A-2B is merely for illustrative and explanatory purposes, and those of skill in the art will appreciate that various embodiments of the present disclosure can be configured with different types of environmental control systems and/or different configurations of environmental control systems, and thus, the present discussion and associated illustrations are not intended to be limiting.

As shown, in FIGS. 2A-2B, the ram module 202 includes a primary heat exchanger 208a and a secondary heat exchanger 208b. The heat exchangers 208a, 208b are configured to receive ram air Aᵣₐₘ and bleed air A_{bleed} to condition air within the ram module 202. The ram module 202 further includes a ram outlet header 210 and a ram exhaust header 212. Located between the headers 210, 212 may be one or more ram fans 214. Air from the ram module 202 can be conveyed to or from the refrigeration module 204 through the ducts 206a, 206b, 206c.

The refrigeration module 204 includes a condenser heat exchanger 216 and one or more air cycle machines 218. The condenser heat exchanger 216 can be fluidly connected to the secondary heat exchanger 208b by a first duct 206a that can supply hot air to the condenser heat exchanger 216. The air cycle machines 218 can be connected to one or both of the heat exchangers 208a, 208b, as shown. Recirculated air A_{recirc} can be supplied to and mixed with turbine outlet air from the air cycle machines 218 as indicated in FIG. 2A.

The condenser heat exchanger 216 is configured to condition air to supply relatively cool or cold air A_{cabin} to a cabin of an aircraft. Thus, the condenser heat exchanger 216 includes an outlet header 220. The hot air that is supplied to the condenser heat exchanger 216 through the duct 206a is fed into an inlet header 222 of the condenser heat exchanger 216.

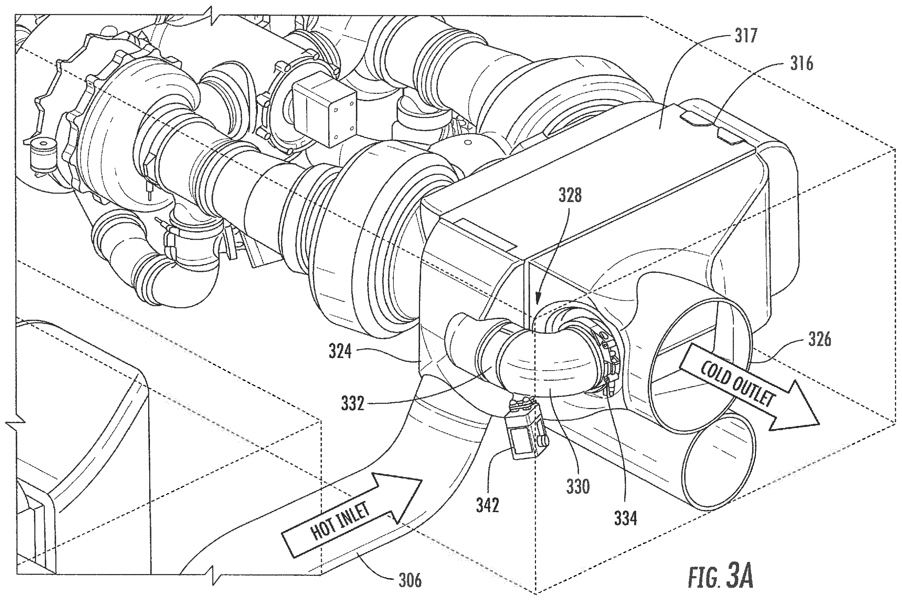

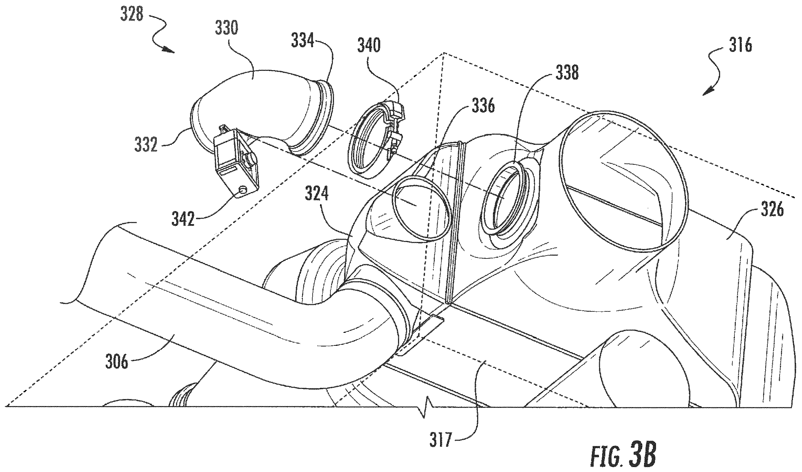

Turning now to FIGS. 3A-3B, schematic illustrations of a heat exchanger, such as a condenser heat exchanger, having an integral bypass valve in accordance with an example embodiment of the present disclosure are shown. Although shown and described herein as part of a refrigeration module of an environmental control unit of an aircraft, those of skill in the art will appreciate that embodiments provided herein can be employed with any heat exchanger, and thus the present illustrations and related discussion are not intended to be limited to a specific type or configuration of a heat exchanger. FIG. 3B illustrates an exploded view of the heat exchanger configuration of FIG. 3A.

FIGS. 3A-3B illustrate a heat exchanger 316 that is similar to that shown and described above with respect to FIGS. 2A-2B. For example, heat exchanger 316 includes a first header 324 (e.g., inlet header) and a second header 326 (e.g., outlet header), wherein both the first and second headers 324, 326 are attached or otherwise connected to a heat exchanger core 317. The heat exchanger core 317 defines at least two separate heat exchanger flow streams to enable thermal exchange and thus heat transfer between multiple fluids and/or working media, as known in the art. A duct 306 is configured to supply hot air into the first header 324 of the heat exchanger 316, and cold or conditioned air can exit the heat exchanger 316 through the second header 326.

As shown, the heat exchanger 316 includes an integrated bypass system 328. The integrated bypass system 328 provides, in some embodiments, a compact means for bypassing two separate heat exchanger flow streams. That is, the integrated bypass system 328, in the configuration of FIGS. 3A-3B, is configured to enable hot air to be bypassed directly from the first header 324 to the second header 326, thus bypassing the flow streams of the heat exchanger 316 within the heat exchanger core 317. That is, in some embodiments, hot inlet air can be bypassed directly to a cold outlet.

The integrated bypass system 328 includes a bypass conduit 330 that extends from a first end 332 to a second end 334. The first end 332 of the bypass conduit 330, as shown, is fluidly connected to the first header 324 at a first bypass port 336 on the first header 324 and the second end 334 of the bypass conduit 330 is fluidly connected to the second header 326 at a second bypass port 338 on the second header 326. The connection between the first end 332 of the bypass conduit 330 and the first bypass port 336 can be by means of a slip joint or other movable/adjustable connection or joint. The connection between the second end 334 and the second bypass port 338 can include a fixed coupling 340. The fixed coupling 340 can provide fixed connection between the bypass conduit 330 and the second header 326. In some embodiments, the fixed coupling 340 can be, for example, a fixed cavity coupling, a bolted flange, a C-clamp, a D-clamp, v-band, or other type of fixed connection. In some embodiments, the fixed coupling 340 can be configured to react to vibrations and/or operational loads such that damage and/or fatigue to the integrated bypass system 328 can be minimized. Those of skill in the art will appreciate that different mechanisms of connection can be used without departing from the scope of the present disclosure. Further, in some embodiments, the particular type or configuration of connection at the ends of the bypass conduit can be switched without departing from the scope of the present disclosure.

To control flow through the integrated bypass system 328, a control valve 342 is configured within the bypass conduit 330. The control valve 342 is a flow control valve that can control an amount of airflow that can be bypassed from the first header 324 to the second header 326. In some embodiments, the control valve 342 can be completely closed such that no airflow can pass or flow through the bypass conduit 330. The control valve 342 can be, for example, an altitude valve such as a butterfly valve, ball valve, gate valve, check valve, globe valve, etc. Those of skill in the art will appreciate that the type of fixed coupling and/or the type of control valve (including activation of the valve) can be selected based on the specific application and configuration of the heat exchanger to which the integrated bypass system is applied.

In some embodiments, the slip joint at the first end 332 enables easy installation of the integrated bypass system 328. For example, the integrated bypass system can be prefabricated and packaged as a complete unit that can be slid into engagement at the first end with a first header and then rigidly attached to a second header using the fixed coupling. Further, the fixed coupling enables simple removal and/or replacement of the integrated bypass system or a portion thereof (e.g., control valve).

Advantageously, embodiments described herein can eliminate the need for traditional external ducts and couplings resulting in cost, weight, and volume savings. For example, embodiments of the present disclosure can eliminates up to two ducts, four flanges, eight seals, and three couplings when compared to a conventional supply duct configuration.

The use of the terms "a," "an," "the," and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to normal operational attitude and should not be considered otherwise limiting.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

For example, although shown and described with respect to a heat exchanger having an integrated bypass system as part of an environmental control system of an aircraft, embodiments provided herein can be employed with various other heat exchanger configurations, whether in the aircraft industry or otherwise.

Accordingly, the present disclosure is not to be seen as limited by the foregoing description, but is only limited by the scope of the appended claims.

## Claims

1. An environmental control system (200) of an aircraft, the environmental control system comprising:
a condenser (216) configured to condition air to be supplied to a cabin of the aircraft, the condenser comprising a heat exchanger, said heat exchanger comprising a heat exchanger core (317) defining at least two separate heat exchanger flow streams;
a first header (324) configured on the heat exchanger core (317) and fluidly connected to a first of the separate heat exchanger flow streams;
a second header (326) configured on the heat exchanger core (317) and fluidly connected to a second of the separate heat exchanger flow streams;
**characterised in**
an integrated bypass system (328) configured to directly fluidly connect the first header (324) to the second header (326) with a bypass conduit (330), the integrated bypass system (328) having a control valve (342) within the bypass conduit and configured to control flow through the bypass conduit (330).

2. The environmental control system of claim 1, further comprising a ram module (202) and a refrigeration module (204), wherein the condenser (216) is configured within the refrigeration module (204).

3. The environmental control system of claim 2, further comprising at least one duct fluidly connecting the ram module (202) to the first header (324) of the condenser (216).

4. The environmental control system of claim 1, wherein the bypass conduit (330) is connected to the first header (324) by a slip joint at a first end of the bypass conduit (330).

5. The environmental control system of any of claims 1 or 4, wherein the bypass conduit (330) is connected to the second header (326) by a fixed connection at a second end of the bypass conduit (330).

6. The environmental control system of claim 5, wherein the fixed connection is one of a fixed cavity coupling, a bolted flange, a C-clamp, a D-clamp, or v-band.

7. The environmental control system of any of the preceding claims, wherein the control valve (342) is one of a butterfly valve, ball valve, gate valve, check valve, or globe valve.

8. The environmental control system of any of the preceding claims, wherein the first header (324) is configured to receive hot air and the second header is configured to exhaust cold air.

## Patentansprüche

1. Klimatisierungssystem (200) eines Flugzeugs, wobei das Klimatisierungssystem folgendes umfasst:
einen Kondensator (216), der konfiguriert ist, um Luft aufzubereiten, die einer Kabine des Flugzeugs zugeführt wird, wobei der Kondensator einen Wärmetauscher umfasst, wobei der Wärmetauscher einen Wärmetauscherkern (317) umfasst, der mindestens zwei separate Wärmetauscherströmungen abgrenzt;
einen ersten Kopf (324), der auf dem Wärmetauscherkern (317) konfiguriert ist und fluid mit einer ersten der separaten Wärmetauscherströmungen verbunden ist;
einen zweiten Kopf (326), der auf dem Wärmetauscher (317) konfiguriert ist und fluid mit einer zweiten der separaten Wärmetauscherströmungen verbunden ist;
**gekennzeichnet durch**
ein integriertes Bypasssystem (328), das konfiguriert ist, um den ersten Kopf (324) direkt fluid mit dem zweiten Kopf (326) über eine Bypassleitung (330) zu verbinden, wobei das integrierte Bypasssystem (328) ein Steuerventil (342) innerhalb der Bypassleitung aufweist und konfiguriert ist, um die Strömung durch die Bypassleitung (330) zu steuern.

2. Klimatisierungssystem nach Anspruch 1, weiter ein Ansaugmodul (202) und ein Kühlmodul (204) umfassend, wobei der Kondensator (216) innerhalb des Kühlmoduls (204) konfiguriert ist.

3. Klimatisierungssystem nach Anspruch 2, weiter mindestens einen Kanal umfassend, der das Ansaugmodul (202) fluid mit dem ersten Kopf (324) des Kondensators (216) verbindet.

4. Klimatisierungssystem nach Anspruch 1, wobei die Bypassleitung (330) mit dem ersten Kopf (324) verbunden ist über eine Gleitverbindung an einem ersten Ende der Bypassleitung (330).

5. Klimatisierungssystem nach Anspruch 1 oder 4, wobei die Bypassleitung (330) mit dem zweiten Kopf (326) verbunden ist über eine feste Verbindung an einem zweiten Ende der Bypassleitung (330).

6. Klimatisierungssystem nach Anspruch 5, wobei die feste Verbindung eine von einer festen Hohlraumkopplung, einem verschraubten Flansch, einer C-Schelle, einer D-Schelle oder V-Bandschelle ist.

7. Klimatisierungssystem nach einem der vorangehenden Ansprüche, wobei das Steuerventil (342) eines von einem Drosselventil, Kugelventil, Schieberventil, Rückschlagventil oder Hubventil ist.

8. Klimatisierungssystem nach einem der vorangehenden Ansprüche, wobei der erste Kopf (324) konfiguriert ist, um heiße Luft aufzunehmen, und der zweite Kopf konfiguriert ist, um kalte Luft auszustoßen.

## Revendications

1. Système de commande environnemental (200) d'un aéronef, le système de commande environnemental comprenant :
un condensateur (216) configuré pour conditionner de l'air devant être acheminé dans une cabine de l'aéronef, le condensateur comprenant un échangeur de chaleur, ledit échangeur de chaleur comprenant un coeur d'échangeur de chaleur (317) définissant au moins deux courants de flux d'échangeur de chaleur séparés ;
un premier collecteur (324) configuré sur le coeur d'échangeur de chaleur (317) et raccordé fluidiquement à un premier des courants de flux d'échangeur de chaleur séparés ;
un second collecteur (326) configuré sur le coeur d'échangeur de chaleur (317) et raccordé fluidiquement à un second des courants de flux d'échangeur de chaleur séparés ;
**caractérisé par**
un système de dérivation intégré (328) configuré pour raccorder fluidiquement directement le premier collecteur (324) au second collecteur (326) avec un conduit de dérivation (330), le système de dérivation intégré (328) présentant une soupape de commande (342) dans le conduit de dérivation et étant configuré pour commander le flux au travers du conduit de dérivation (330).

2. Système de commande environnemental selon la revendication 1, comprenant en outre un module de ram (202) et un module de réfrigération (204), dans lequel le condensateur (216) est configuré dans le module de réfrigération (204).

3. Système de commande environnemental selon la revendication 2, comprenant en outre au moins un conduit raccordant fluidiquement le module de ram (202) au premier collecteur (324) du condensateur (216).

4. Système de commande environnemental selon la revendication 1, dans lequel le conduit de dérivation (330) est raccordé au premier collecteur (324) par un joint coulissant à une première extrémité du conduit de dérivation (330).

5. Système de commande environnemental selon l'une quelconque des revendications 1 ou 4, dans lequel le conduit de dérivation (330) est raccordé au second collecteur (326) par un raccordement fixe à une seconde extrémité du conduit de dérivation (330).

6. Système de commande environnemental selon la revendication 5, dans lequel le raccordement fixe est un parmi un couplage de cavité fixe, une bride boulonnée, une pince C, une pince D, ou une bande v.

7. Système de commande environnemental selon l'une quelconque des revendications précédentes, dans lequel la soupape de commande (342) est une d'une soupape papillon, soupape à bille, soupape à obturateur, clapet antiretour ou soupape à disque.

8. Système de commande environnemental selon l'une quelconque des revendications précédentes, dans lequel le premier collecteur (324) est configuré pour recevoir de l'air chaud et le second collecteur est configuré pour évacuer de l'air froid.
